(19) Europäisches Patentamt
European Patent Office
Office européen des brevets

(11) Numéro de publication : **0 086 138**
**B2**

(12) # NOUVEAU FASCICULE DE BREVET EUROPÉEN

(45) Date de publication du nouveau fascicule du brevet : **07.03.90**

(51) Int. Cl.$^5$ : **A 62 B 21/00**, C 01 B 13/02

(21) Numéro de dépôt : **83400180.2**

(22) Date de dépôt : **27.01.83**

(54) **Compositions à base de superoxyde de potassium et leurs applications.**

(30) Priorité : **05.02.82 FR 8201844**

(43) Date de publication de la demande :
**17.08.83 Bulletin 83/33**

(45) Mention de la délivrance du brevet :
**02.01.86 Bulletin 86/01**

(45) Mention de la décision concernant l'opposition :
**07.03.90 Bulletin 90/10**

(84) Etats contractants désignés :
**BE DE FR GB IT NL**

(56) Documents cités :
**DE-A- 2 316 214**
**DE-C- 643 577**
**DE-C- 648 911**
**FR-A- 2 105 933**
**FR-A- 2 175 652**
**GB-A- 671 107**
**GB-A- 1 018 751**
**US-A- 4 020 833**
**Le dossier contient des informations techniques présentées postérieurement au dépôt de la demande et ne figurant pas dans le présent fascicule.**

(73) Titulaire : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cedex 07 (FR)**

(72) Inventeur : **Malafosse, Jean**
**3, rue Dervet**
**F-71100 Chalon-sur-Saône (FR)**
Inventeur : **Varlot, Gérard**
**67, rue de Corcelles Champforgeuil**
**F-71100 Chalon-sur-Saône (FR)**
Inventeur : **Pierre, Michel**
**3, rue du Bois de Menuse Saint-Jean-des Vignes**
**F-71100 Chalon-sur-Saône (FR)**

(74) Mandataire : **Sadones Laurent, Renée et al**
**L'AIR LIQUIDE 75, quai d'Orsay**
**F-75321 Paris Cedex 07 (FR)**

EP 0 086 138 B2

## Description

La présente invention concerne des compositions à base de superoxyde de potassium obtenu par réaction du peroxyde d'hydrogène avec de la potasse et dismutation du peroxyde en solution ainsi préparé, et leurs applications à la régénération des atmosphères respirables.

Le superoxyde de potassium est un produit particulièrement bien adapté à la génération d'atmosphère respirable puisqu'il a la propriété de fixer le gaz carbonique et la vapeur d'eau et de dégager de l'oxygène selon les réactions :

$$2KO_2 + CO_2 \rightarrow K_2CO_3 + 3/2\ O_2 \quad (1)$$

$$2KO_2 + H_2O \rightarrow 2KOH + 3/2\ O_2 \quad (2)$$

Cette propriété est utilisée pour réaliser des régénérateurs d'atmosphères d'enceintes closes et des appareils respiratoires fonctionnant en circuit fermé.

Les appareils respiratoires sont constitués essentiellement d'une cartouche (boîte métallique) dans laquelle est placé le superoxyde et d'un sac poumon, ces deux éléments étant reliés entre eux et à l'utilisateur de l'appareil de telle façon que le gaz expiré traverse le réactif en y abandonnant la plus grande partie du gaz carbonique qu'il contient ainsi qu'une grande partie de la vapeur d'eau et s'y enrichit en oxygène ; ce gaz est stocké dans le sac poumon dans lequel l'utilisateur aspire un air régénéré.

Cet appareil devant être porté par l'utilisateur, il convient d'obtenir le meilleur compromis entre poids total de l'appareil et autonomie. Pour un niveau respiratoire donné, ce compromis est d'autant plus difficile à réaliser que l'autonomie de l'appareil est courte et par conséquent, que la charge de superoxyde de potassium est faible. En effet, lorsque le porteur de l'appareil fait un effort soutenu, correspondant à un travail de 100 à 120 watts par exemple, la consommation biologique d'oxygène se situe entre 1,2 à 1,5 l/mn et le $CO_2$ rejeté est compris entre 1 et 1,35 l/mn pour un quotient respiratoire de 0,90. Le débit respiratoire se situe entre 30 et 35 l/mn.

Lorsque la charge de superoxyde diminue, le niveau réactionnel imposé à la charge augmente et le taux d'utilisation du superoxyde tend alors à diminuer, à moins que l'on augmente sa réactivité ; mais la réactivité est limitée d'une part par le comportement du superoxyde à la température et d'autre part par les échanges chimiques entre le gaz et le superoxyde.

Un appareil est généralement conçu pour répondre aux besoins respiratoires d'un homme effectuant un niveau d'effort donné pendant une durée bien déterminée.

On est donc conduit, pour chaque appareil, à rechercher le poids minimum de superoxyde correspondant à un taux d'utilisation maximum, ce qui implique de corréler au mieux les paramètres suivants : réactivité du superoxyde, son comportement à la température, grosseur et forme des pastilles de superoxyde et structure de la charge de superoxyde.

Si l'on veut maintenir le poids et les dimensions de l'appareil dans des limites tolérables, il faut en effet que la charge de superoxyde soit utilisée aussi complètement que possible sans pour autant que la teneur en $CO_2$ du gaz respiré dépasse 1,5 % ni que la pression à exercer à l'expiration devienne supérieure à 6,5 millibars.

Plusieurs solutions partielles ont été suggérées et même utilisées dans les appareils existants. Afin d'obtenir le meilleur rendement de génération d'oxygène, on ajoute un catalyseur, comme par exemple un cation dérivant des métaux de transition, en général le cation $Cu^{++}$.

Quel que soit le mode de fabrication du superoxyde de potassium, il est élaboré d'abord sous forme pulvérulente et très divisée. Selon un procédé on brûle du potassium métallique dans une enceinte contenant de l'air suroxygéné ; on obtient alors $KO_2$ sous forme de flocons très légers qui sont ensuite agglomérés, après addition du catalyseur, en fragments de formes, de dimensions et de compositions assez hétérogènes.

Le brevet US.A.4.020.833, mettant en service du superoxyde de potassium fabriqué par voie sèche, par combustion dans l'air du potassium métal pulvérisé, à teneur élevée en superoxyde de potassium pur, de l'ordre de 95 à 96 % en $KO_2$ et ne contenant pratiquement pas de potasse, a proposé de diminuer la surgénération d'oxygène fourni par ledit superoxyde de potassium en l'associant à de l'oxyde de calcium, les deux constituants étant mélangés, dans le même lit, ou dans d'autres cas en lits séparés. De tels problèmes ne se posent pas dans le cas du superoxide utilisé dans le cadre de l'invention, obtenu par voie humide et contenant de la potasse et de l'eau. Dans ce cas, il y a au contraire sous-génération d'oxygène, car la fixation du $CO_2$ par la potasse ne dégage pas d'oxygène.

Dans le procédé décrit dans le brevet français 2.175.652, on fait réagir le peroxyde d'hydrogène et la potasse, puis on réalise la dismutation du peroxyde en solution ainsi préparé, sur la surface externe chaude d'un cyclindre horizontal, tournant autour de son axe, puis le superoxyde de potassium est recueilli sous forme de paillettes par raclage de la surface du cylindre. Le produit ainsi fabriqué contient environ 80 à 85 % de $KO_2$, 12 à 15 % de KOH, 2 à 5 % de $H_2O$. Après addition d'oxychlorure de cuivre, il est très facilement mis sous forme de pastilles par traitement dans une machine à comprimer rotative, permettant un conditionnement des particules de forme, composition et porosité homogènes et rigoureusement contrôlées. Cependant, ces différents procédés d'agglomération ne sont pas suffisants

pour assurer, dans le cas d'une utilisation intensive de la charge régénératrice, une stabilité ou une augmentation suffisamment faible de la perte de charge à l'expiration, qui soit compatible avec une mise en œuvre prolongée de l'appareil respiratoire et un taux d'utilisation élevé du superoxyde de potassium.

En effet, la forte exothermie des réactions (1) et (2) induit au sein de la charge de $KO_2$, un échauffement important. Au cœur de la charge régénératrice les pastilles ou les agglomérats sont détruits et transformés en masse plus ou moins visqueuse qui s'oppose au passage du gaz par colmatage des trous, créant une élévation trop importante de la perte de charge, ou bien entraîne la formation de chemins préférentiels ce qui diminue le taux de fixation de $CO_2$ dont la teneur dans le gaz inspiré devient trop rapidement supérieur au seuil tolérable.

On a cherché à pallier ces inconvénients en donnant à la cartouche une structure telle que le gaz ne traverse à faible vitesse qu'une petite épaisseur de superoxyde, ou en divisant la charge en petites fractions par des cloisons métalliques qui viennent au contact de la paroi et ont ainsi une fonction d'échange thermique ; on aboutit ainsi à des structures complexes dans lesquelles le poids de matière non réactive est relativement important ; elles sont d'un prix de revient élevé et leur remplissage est assez malaisé et se prête mal à une automatisation.

Or, il a été trouvé un moyen permettant de supprimer l'augmentation excessive des pertes de charge du superoxyde de potassium au cours de conditions intensives de régénération ; et ainsi de maîtriser un problème resté sans solution depuis plus de dix ans. De plus, ce produit s'accomode de structures très simples pour les charges régénératrices de superoxyde de potassium. On a désormais la possibilité de réaliser des cartouches d'appareils de structure simple, sans aménagement intérieur et dans lesquelles tout le volume et le poids sont utilisés pour le mélange réactif.

On a en effet constaté que, l'addition au superoxyde de produits qui ont une fonction chimique utilisable en vue de la fixation de dioxyde de carbone et qui, bien qu'hygroscopiques, ne donnent pas dans les conditions de réaction des dérivés de bas points de fusion, permettent la réalisation de mélanges pour lesquels les inconvénients et les limites d'utilisation décrits sont très sensiblement atténués.

Selon l'invention, il est proposé une charge régénératrice des atmosphères respirables à base de superoxyde de potassium sous la forme d'agglomérats réguliers et homogènes tels que des pastilles, obtenus par compression, le superoxyde de potassium mis en œuvre étant obtenu selon la technique (décrite dans le brevet FR.A.2175.652) consistant en la réaction de peroxyde d'hydrogène et d'hydroxyde de potassium, et la réalisation de la dismutation du peroxyde en solution ainsi préparé, sur la surface externe chaude d'un cylindre horizontal tournant, puis en la récupération du superoxyde de potassium ainsi formé par raclage de la surface du cylindre, caractérisée en ce que lesdits agglomérats réguliers et homogènes sont obtenus par compression d'un mélange à l'état pulvérulent de superoxyde de potassium et d'un additif représenté par l'oxyde de calcium incorporé à l'état pulvérulent à une concentration comprise entre 2 et 30 % en poids par rapport au mélange total.

La proportion de chaux par rapport au mélange total peut varier de préférence entre 5 et 15 % en poids.

Ces compositions à base de superoxyde de potassium sont obtenues par mélange à l'état pulvérulent de superoxyde de potassium, éventuellement de catalyseur et de la chaux, dans un mélangeur de poudre de type usuel, tel un mélangeur en V ou un appareil à mouvement hélicoïdal. On sélectionne un lot de chaux de dimension granulométrique au plus égale à celle du superoxyde de potassium. On traite ensuite les compositions ainsi préparées sur une machine à comprimer rotative industrielle, en vue de les conditionner sous forme d'agglomérats réguliers et homogènes, tels des pastilles.

Selon le type de cartouche de régénération choisie et les conditions de fonctionnement, on peut utiliser une charge régénératrice homogène de pastilles contenant toutes la même teneur en additif, ou bien un mélange homogène de pastilles de superoxyde de potassium dispersées dans des pastilles de superoxyde de potassium avec additif. Ces mélanges de pastilles de $KO_2$ peuvent être à teneurs variables en chaux ; la proportion des pastilles de superoxyde de potassium contenant l'additif est de 50 à 95 % en poids, de préférence de 60 à 90 %.

On a observé qu'il y a parfois intérêt à utiliser des mélanges de pastilles de $KO_2$ dont la plus grande partie sera à teneur relativement élevée en additif et l'autre partie, sera à teneur nulle ou faible en produit d'addition. Ainsi, on peut envisager de réaliser des charges régénératrices, constituées par une succession alternée de couches de nature homogène, chaque couche étant composée soit de pastilles de superoxyde de potassium, soit de pastilles de superoxyde de potassium avec additif selon l'invention. Dans les charges régénératrices les couches peuvent être superposées ou juxtaposées.

Il est donné ci-après des exemples qui illustrent l'invention à titre non limitatif.

L'appareil d'essai est constitué d'un poumon artificiel commercialisé par la firme AUER ; il est constitué d'un gros cylindre dans lequel travaille une membrane dont le mouvement alternatif et un jeu de clapets adéquats assurent dans le circuit un débit pulsé constant ; lui sont reliées deux autres cylindres plus petits, munis de membranes dont les mouvements sont asservis mécaniquement au mouvement de la membrane principale ; l'un de ces cylindres connectés à une bouteille de dioxyde de carbone introduit à chaque pulsation dans le débit principal un volume constant de $CO_2$ ; l'autre en extrait vers l'extérieur un volume de mélange égal au volume de $CO_2$ introduit ; le mélange air-$CO_2$ barbote ensuite dans un récipient d'eau dont la température est réglable puis traverse la cartouche essayée ; le gaz traité est recueilli dans un sac respiratoire relié au gros cylindre du respirateur « AUER » ; une partie aliquote du

gaz est prélevée après la cartouche et envoyée après séchage sur un oxymètre (analyse par paramagnétisme) et un analyseur de $CO_2$ (cellule intra-rouge) puis est retournée au circuit principal ; un capteur de pression est placé en parallèle entre l'entrée et la sortie de la cartouche et mesure la variation de perte de charge de celle-ci.

Toutes ces données sont enregistrées en fonction du temps.

L'autonomie en minutes mesurée dans les exemples ci-dessous est déterminée par l'une et/ou l'autre des deux limites :

le temps au-delà duquel la perte de charge de la cartouche devient supérieure à 5 millibars. La perte de charge est désignée par le symbole « ΔP ».

Le temps au-delà duquel la teneur en $CO_2$ dans le gaz effluent dépasse 1,5 %.

La génération d'oxygène dépasse souvent le volume de $CO_2$ fixé et on maintient constant le volume du circuit en extrayant l'excès de gaz par une soupape tarée placée sur le sac respiratoire ; dans certains cas on a mesuré cet excès par un compteur à gaz placé derrière la soupape.

Les cartouches expérimentales utilisées sont de deux types. Dans la cartouche radiale : le superoxyde est placé dans une couronne cylindrique ; le gaz entre dans le cylindre central en tôle perforé, traverse le superoxyde et est recueilli à la périphérie ; dans cette cartouche la vitesse du gaz dans la couche solide — toutes choses étant égales par ailleurs — est constamment décroissante. Dans la cartouche axiale : le superoxyde est placé dans une boîte parallélépipédique ; le gaz arrive au bas de la cartouche par un tube central non percé dans une chambre dont le plafond est une tôle perforée supportant le superoxyde ; le gaz est recueilli au sommet (de l'autre côté) de la couche ; dans ce cas, la vitesse du gaz dans la couche de pastilles est constante (toutes choses restant égales par ailleurs).

Tous les essais décrits dans les exemples ci-dessous sont effectués sur des charges composées de pastilles biconvexes de diamètre : 9 mm ; épaisseur : 4,5 mm ; épaisseur de la partie cylindrique médiane : 2 mm. La porosité déduite du poids et du volume des pastilles et de la densité vraie de la poudre est de 45 %. Toutes les charges sont tassées par vibration.

### Exemple 1

On utilise un mélange à 10 % CaO ; sa composition chimique est la suivante :

$KO_2$ % : 73,8   KOH % : 13,3

CaO % : 10   $H_2O$ % : 2,4   $Cu^{++}$ : 0,15 %

On place 1 600 g de ce mélange dans une boîte parallélépipédique dont la section utile est de 139 $cm^2$ ; la hauteur du lit est de 16 cm. On règle le respirateur « AUER » de telle façon que le débit moyen de ventilation soit de 30 l/mn (mesuré à 22 °C) à raison de 20 pulsations par minute ; le gaz contient 4,3-4,5 % $CO_2$ ; il est porté à 34-35° avant de pénétrer dans la cartouche et son humidité relative à cette température est supérieure à 94 %. La fin d'autonomie est causée par la perte de charge qui atteint 5 millibars après 104 mm de fonctionnement ; la teneur en $CO_2$ dans le gaz traité reste nulle jusqu'à la 75$^{e}$ minute puis s'élève progressivement pour atteindre 1 % à la 100$^{e}$ minute ; son accroissement est alors assez rapide : 0,12 % par mn ; la génération d'oxygène est d'environ 1 l par minute en fin d'autonomie et le taux d'utilisation du superoxyde est d'environ 90 %.

### Exemple 2

On répète l'exemple 1 sur le même produit et dans les mêmes conditions. On mesure une autonomie de 103 minutes, temps au bout duquel la teneur en $CO_2$ dans le gaz traité est de 1,5 % ; au même temps la perte de charge est de 3,3 millibars mais son accroissement est rapide : environ 0,3 millibars par minute.

### Exemple 3

On répète l'exemple 1 sur le même produit mais on n'utilise que 1 500 g de produit ; la hauteur du lit est alors de 15 cm. La fin d'autonomie après 87 minutes de fonctionnement est causée par la teneur en $CO_2$ ; la perte de charge est seulement de 2 millibars et la quantité d'oxygène généré est supérieure à 1 l/mn.

### Exemple 4

On répète l'exemple 1 en diminuant le débit de ventilation à 26 l/mn au lieu de 30 l/mn. On mesure une autonomie de 114 mn ; sa fin est causée par la perte de charge ; la teneur en $CO_2$ en fin d'autonomie est de 1 % ; la génération d'oxygène est de l'ordre de 1 l/mn.

### Exemple 5

On répète l'exemple 1 en augmentant le débit de ventilation à 35 l/mn la fin d'autonomie après 84 mn

est due à la teneur en $CO_2$ mais la perte de charge de 3,3 mbars est en rapide augmentation ; la génération d'oxygène est de l'ordre de 1,2 l par minute.

Exemple 6

On opère à 26 l/mn sur 1 500 g de mélange ayant la composition suivante :

$KO_2$ : 74,1 % CaO : 8 %

KOH : 13,4 % $H_2O$ : 2,5 % $Cu^{++}$ : 0,15 %

Les autres conditions d'essai sont celles de l'exemple 1 ; la fin d'autonomie après 111 mn est causée par la teneur en $CO_2$ ; à ce moment-là la perte de charge est de 2,5 millibars.

Exemple 7

Essai témoin sur un produit ne contenant pas de chaux et ayant la composition suivante :

$KO_2$ : 81,2 % KOH : 15,8 % $H_2O$ : 3,0 % $Cu^{++}$ : 0,15 %

On opère sur une charge de 1 500 g avec un débit de ventilation de 30 l/mn ; les autres conditions d'essai sont celles de l'exemple 1 ; la fin d'autonomie est atteinte en 38 mn à cause de la perte de charge ; la teneur en $CO_2$ du gaz traité est nulle mais le taux d'utilisation du superoxyde déduit de la génération d'oxygène n'est que de 32 %.

Exemple 8

Deuxième essai témoin. On opère sur le même produit et les mêmes conditions que l'exemple 7 mais à 26 l/mn. On mesure une autonomie limitée à 45 mn à cause de l'augmentation de la perte de charge ; la teneur en $CO_2$ du gaz traité est nulle.

Exemple 9

L'examen du contenu des cartouches après les essais 7 et 8, montre que seule a réagi une petite partie de la charge placée au niveau de l'attaque du gaz ; elle est devenue noirâtre ; la structure en pastilles a disparu pour laisser la place à un mélange homogène et compact offrant une plus forte résistance au passage du gaz ; au-dessus de cette croûte représentant moins du quart du contenu de la cartouche, on retrouve le reste de la charge sous forme de pastilles s'écoulant librement et ayant conservé leur couleur jaune initiale. Au contraire, dans les exemples 1 à 6, le contenu de la cartouche après essais a un aspect très différent ; il est en majorité constitué d'un agglomérat de pastilles collées entre elles mais ayant conservé leur forme initiale ; elles sont noires en surface et blanches ou grises à l'intérieur et forment un bloc friable et très poreux présentant peu de résistance au passage du gaz ; on ne distingue plus de produit jaune ce qui montre que tout le superoxyde est entré en réaction.

Exemple 10 — Cartouche radiale

Elle est constituée de deux cylindres concentriques en tôle perforée (trous de 1 mm) de 165 et 55 mm de diamètre ; la charge de 1 500 g de mélange à base de superoxyde est placée dans la couronne cylindrique ménagée par ces deux cylindres et emprisonnée en haut et en bas par deux disques en tôle pleine ; elle est séparée en 5 fractions de 300 g par des disques en tôle perforée. Le gaz entre par le cylindre intérieur, est diffusé dans la charge par les trous de celui-ci et est collecté à la périphérie ; l'épaisseur de superoxyde traversé par le gaz est de 5,5 cm.

On réalise les essais du tableau ci-dessous avec un débit de ventilation global de 35 l/mn, à 20 pulsations par minute ; le gaz contient 4,5 à 4,8 % $CO_2$ et est saturé en humidité à 35-37 °C. La mesure de l'autonomie est faite selon les mêmes critères que dans les exemples précédents.

(Voir tableau page 6)

| | Temps d'autonomie | Cause de la fin d'autonomie | valeur de l'autre critère |
|---|---|---|---|
| 1 | 43 - 48 mn | ΔP | $CO_2$ : 0,8 - 1,4 % |
| 2 | 33 mn | $CO_2$ | ΔP constante 4 mbars |
| 3 | 23 mn | $CO_2$ | " 3 mbars |
| 4 | 72 mn | $CO_2$ | " 3 mbars |
| 5 | 71 mn | $CO_2$ | " 3,7 mbars |
| 6 | 84 mn | $CO_2$ | " 3 mbars |
| 7 | 87 mn | $CO_2$ | " 3,4 mbars |
| 8 | 80 mn | $CO_2$ | " 3,5 mbars |

Les produits utilisés dans ces essais sont les suivants :
1 : produit sans addition de chaux analogue à celui de l'exemple 7
2 : mélange à 8 % CaO
3 : mélange à 10 % CaO
4 : mélange de pastilles : 78 % contiennent 8 % CaO, 22 % ne contiennent pas de chaux
5 : mélange de pastilles : 88 % contiennent 10 % de Cao, 17 % n'en contiennent pas
6 : mélange de pastilles : 75 % contiennent 12 % CaO, 25 % n'en contiennent pas
7 : mélange de pastilles : 70 % contiennent 12 % CaO, 30 % n'en contiennent pas
8 : mélange de pastilles : 65 % contiennent 15 % CaO, 35 % n'en contiennent pas

Ces essais montrent que dans ces conditions le produit ne contenant pas d'additif autre que le catalyseur ne permet pas d'obtenir un temps d'utilisation supérieur à 45 minutes environ, à cause d'une augmentation trop rapide de la perte de charge du lit réactif. Les mélanges additionnés de chaux, employés seuls, ne sont pas assez réactifs vis-à-vis du dioxyde de carbone ; l'épaisseur du lit traversée par le gaz n'est pas suffisante. On double pratiquement le temps d'autonomie en dispersant de façon homogène, dans les pastilles à teneur relativement élevée en oxyde de calcium, des pastilles n'en contenant pas.

## Revendications

1. Charge régénératrice des atmosphères respirables à base de superoxyde de potassium sous la forme d'agglomérats réguliers et homogènes tels que des pastilles, obtenus par compression, le superoxyde de potassium mis en œuvre étant obtenu selon la technique consistant en la réaction de peroxyde d'hydrogène et d'hydroxyde de potassium et la réalisation de la dismutation du peroxyde en solution ainsi préparé, sur la surface externe chaude d'un cylindre horizontal tournant, puis en la récupération du superoxyde de potassium ainsi formé par raclage de la surface du cylindre, caractérisée en ce que lesdits agglomérats réguliers et homogènes sont obtenus par compression d'un mélange à l'état pulvérulent de superoxyde de potassium et d'un additif représenté par l'oxyde de calcium incorporé à l'état pulvérulent à une concentration comprise entre 2 et 30 % en poids par rapport au mélange total.

2. Charge régénératrice à base de superoxyde de potassium selon la revendication 1, caractérisée en ce que la chaux est incorporée au superoxyde de potassium à l'état pulvérulent à une concentration comprise entre 5 et 15 % en poids par rapport au mélange total.

3. Charge régénératrice, à base de superoxyde de potassium, selon la revendication 1, caractérisée en ce qu'elle est constituée par un mélange homogène de pastilles de superoxyde de potassium dispersées dans des pastilles avec additif selon la revendication 1 ou 2, la proportion de pastilles de superoxyde de potassium avec additif est comprise entre 50 et 95 % en poids.

4. Charge régénératrice selon la revendication 3, caractérisée en ce la proportion de pastilles avec additif est comprise entre 60 et 90 % en poids.

5. Charge régénératrice, à base de superoxyde de potassium selon la revendication 1, caractérisée par une succession alternée de couches de nature homogène, chaque couche étant composée soit de pastilles de superoxyde de potassium, soit de pastilles de superoxyde de potassium avec additif selon la revendication 1 ou 2.

6. Charge régénératrice à base de superoxyde de potassium selon la revendication 5, caractérisée en ce que les couches sont superposées.

7. Charge régénératrice à base de superoxyde de potassium selon la revendication 5, caractérisée en ce que les couches sont juxtaposées.

8. Application des charges régénératrices selon une quelconque des revendications 1 à 7, dans les régénérateurs d'atmosphères d'enceintes closes et dans les cartouches d'appareils respiratoires fonctionnant en circuit fermé, à structure axiale ou radiale.

**Claims**

1. Regenerative charge for breathable atmospheres based on potassium superoxide in the form of regular and homogeneous agglomerates such as pellets, obtained by compression, the potassium superoxide used being obtained by the technique consisting of the reaction of hydrogen peroxide and of potassium hydroxide and producing the dismutation of the peroxide in solution thus prepared, on the hot outer surface of a rotating horizontal cylinder, and then of the recovery of the potassium superoxide thus formed by scraping of the surface of the cylinder, characterised in that the said regular and homogeneous agglomerates are obtained by compression of a mixture in the powdery state of potassium superoxide and of an additive represented by calcium oxide blended in the powdery state at a concentration of between 2 and 30 % by weight with respect to the total mixture.

2. Regenerative charge based on potassium superoxide as claimed in claim 1, characterised in that lime is blended with the potassium superoxide in the powdery state at a concentration of between 5 and 15 % by weight with respect to the total mixture.

3. Regenerative charge, based on potassium superoxide as claimed in claim 1, characterised in that it is constituted by a homogeneous mixture of pellets of potassium superoxide dispersed in pellets with additive as claimed in claim 1 or 2, the proportion of pellets of potassium superoxide with additive being between 50 and 95 % by weight.

4. Regenerative charge as claimed in claim 3, characterised in that the proportion of pellets with additive is between 60 and 90 % by weight.

5. Regenerative charge, based on potassium superoxide as claimed in claim 1, characterised by an alternating succession of layers of homogeneous nature, each layer being composed either of pellets of potassium superoxide, or of pellets of potassium superoxide with additive as claimed in claim 1 or 2.

6. Regenerative charge based on potassium superoxide as claimed in claim 5, characterised in that the layers are superposed.

7. Regenerative charge based on potassium superoxide as claimed in claim 5, characterised in that the layers are juxtaposed.

8. Use of regenerative charges as claimed in any of claims 1 to 7, in regenerators of atmospheres of closed chambers and in the cartridges of breathing apparatus operating in closed circuit, of axial or radial structure.

**Patentansprüche**

1. Regenerierbare Beladung einatembarer Atmosphären auf der Basis von Kaliumsuperoxid in der Form gleichmäßiger und homogener Agglomerate, wie Tabletten, die durch Verpressen erhalten wurden, wobei das verwendete Kaliumsuperoxid gemäß der Technik erhalten wurde, die in der Umsetzung von Wasserstoffperoxid und Kaliumhydroxid und der Disproportionierung des so hergestellten Peroxids in Lösung auf der warmen Außenfläche eines rotierenden horizontalen Zylinders und der anschließenden Gewinnung des so gebildeten Kaliumsuperoxids durch Abschaben von der Zylinderoberfläche besteht, dadurch gekennzeichnet, daß die regelmäßigen und homogenen Agglomerate durch Verpressen eines pulverförmigen Gemisches von Kaliumsuperoxid und eines durch Calciumoxid repräsentierten Zusatzstoffes, der in pulverförmigem Zustand in eine Konzentration zwischen 2 und 30 Gew.-%, bezogen auf das Gesamtgemisch, eingearbeitet ist, erhalten werden.

2. Regenerierbare Beladung auf der Basis von Kaliumsuperoxid nach Anspruch 1, dadurch gekennzeichnet, daß der Kalk in das Kaliumsuperoxid in pulverförmigem Zustand in einer Konzentration zwischen 5 und 15 Gew.-%, bezogen auf das Gesamtgemisch, eingearbeitet wird.

3. Regenerierbare Beladung auf der Basis von Kaliumsuperoxid nach Anspruch 1, dadurch gekennzeichnet, daß sie aus einem homogenen Gemisch von Kaliumsuperoxidtabletten, dispergiert in Tabletten mit einem Zusatzstoff nach Anspruch 1 oder 2, besteht und der Anteil der Kaliumsuperoxidtabletten mit Zusatzstoff zwischen 50 und 95 Gew.-% liegt.

4. Regenerierbare Beladung nach Anspruch 3, dadurch gekennzeichnet, daß der Anteil von Tabletten mit Zusatzstoff zwischen 60 und 90 Gew.-% liegt.

5. Regenerierbare Beladung auf der Basis von Kaliumsuperoxid nach Anspruch 1, gekennzeichnet durch eine alternierende Folge von Schichten homogener Natur, wobei jede Schicht entweder aus Kaliumsuperoxidtabletten oder aus Tabletten von Kaliumsuperoxid mit Zusatzstoff nach Anspruch 1 oder 2 besteht.

6. Regenerierbare Beladung auf der Basis von Kaliumsuperoxid nach Anspruch 5, dadurch gekennzeichnet, daß die Schichten übereinanderliegen.

7. Regenerierbare Beladung auf der Basis von Kaliumsuperoxid nach Anspruch 5, dadurch gekennzeichnet, daß die Schichten nebeneinanderliegen.

8. Verwendung von regenerierbaren Beladungen nach einem der Ansprüche 1 bis 7 in Regeneratoren geschlossener Räume und in Patronen von Atmungsgeräten, die mit geschlossenem Kreislauf mit axialer oder radialer Struktur arbeiten.